# EUROPÄISCHE PATENTSCHRIFT

(11) **EP 1 458 582 B1**
(45) Veröffentlichungstag und Bekanntmachung des Hinweises auf die Patenterteilung: **15.03.2006**
(21) Anmeldenummer: 02795023.7
(22) Anmeldetag: 18.12.2002
(51) Int. Cl.: B60J 5/04, B60R 21/02

(54) **SCHUTZTÜR FÜR FAHRERKABINEN, INSBESONDERE VON NUTZFAHRZEUGEN**
PROTECTIVE DOOR FOR DRIVERS' CABINS, IN PARTICULAR FOR UTILITY VEHICLES
PORTE DE PROTECTION POUR CABINE CONDUCTEUR, EN PARTICULIER DE VEHICULES UTILITAIRES

(30) Priorität: 28.12.2001 DE 20120897 U
(43) Veröffentlichungstag der Anmeldung: 22.09.2004
(73) Patentinhaber: IWS Ingenieurgesellschaft Weiner und Schröter MBH, 47475 Kamp-Lintfort (DE)
(72) Erfinder: WEINER, Uwe, 40217 Düsseldorf (DE); SCHRÖTER, Oliver, 45470 Mülheim an der Ruhr (DE)
(74) Vertreter: Viering, Jentschura & Partner
(86) Internationale Anmeldenummer: PCT/DE2002/004652
(87) Internationale Veröffentlichungsnummer: WO 2003/057520

(56) Entgegenhaltungen:
- EP-A- 0 992 382
- PATENT ABSTRACTS OF JAPAN vol. 1999, no. 11, 30. September 1999 (1999-09-30) & JP 11 170926 A (TOYOTA AUTOM LOOM WORKS LTD), 29. Juni 1999 (1999-06-29)

## Beschreibung

Die Erfindung betrifft eine Schutztür für Fahrerkabinen, insbesondere von Nutzfahrzeugen.

Derartige Schutztüren werden beispielsweise in Gabelstaplern zum Schutz des Fahrers vor Verletzungen, insbesondere bei last- und zentrifugalkraftbedingten Unfällen oder fahrbahnbedingtem Kippen eingesetzt.

Aus EP 0 992 382 A2 ist eine Rückhaltevorrichtung für Nutzfahrzeuge bekannt, bei welcher in einem seitlich offenen Fahrerschutzdach ein Rückhaltebügel vorgesehen ist, welcher mit einem Endabschnitt über ein Scharnier an einem hinteren Holm angelenkt und mit seinem anderen Endabschnitt an einem vorderen Holm in einer Schließposition festlegbar ist. Mittels einer solchen Rückhaltevorrichtung wird der Fahrer bis zu einem gewissen Grad vor den bei einem Unfall auftretenden Gefahren geschützt, allerdings bietet das seitlich offene Fahrerschutzdach keinen Schutz des Fahrers vor Schlechtwettereinflüssen.

Zum Schutz des Fahrers vor Schlechtwettereinflüssen sind geschlossene Fahrerkabinen bekannt, in welchen der Fahrer gegen ein seitliches Herausfallen bei fahrbahn- oder unfallbedingtem Kippen des Fahrzeugs weitgehend geschützt ist. Solche Fahrerkabinen haben jedoch den Nachteil, dass bei heißer Witterung zur Schaffung eines angenehmen Klimas im Kabineninnenraum die Tür in der Regel durch den Fahrer geöffnet oder auch ausgehängt wird, so dass das Fahrzeug nicht mehr unfallsicher und daher nicht richtlinienkonform ist.

Aufgabe der vorliegenden Erfindung ist es daher, eine Schutztür für Fahrerkabinen, insbesondere von Nutzfahrzeugen zu schaffen, welche sowohl zum Schutz des Fahrers sowohl vor Wettereinflüssen als auch vor Verletzungen ein Maximum an Flexibilität aufweist.

Diese Aufgabe wird gemäß dem Merkmal des unabhängigen Anspruchs 1 gelöst.

Hierzu weist eine erfindungsgemäße Schutztür ein erstes Türelement, welches eine an einem vorderen Holm einer Fahrerkabine verriegelbare Rückhaltevorrichtung für den Fahrer zur Sicherung gegen seitliches Herausfallen und eine Wetterschutzeinheit aufweist, und ein zu dem ersten Türelement benachbartes zweites Türelement auf, an welchem die Rückhaltevorrichtung über ein erstes Scharnier schwenkbar angelenkt ist und die an einem hinteren Holm der Fahrerkabine befestigbar ist, wobei die Wetterschutzeinheit des ersten Türelementes an dem zweiten Türelement über ein zweites Scharnier zwischen einer Schließposition und einer Aufschwenkposition unabhängig von der Rückhaltevorrichtung um vorzugsweise 180° schwenkbar angelenkt ist.

Dadurch, dass bei der erfindungsgemäßen Schutztür ein erstes, die Rückhaltevorrichtung und die Wetterschutzeinheit aufweisendes Türelement und ein hiervon separates, an der Rückhaltevorrichtung über ein Scharnier schwenkbar angelenktes zweites Türelement vorgesehen ist, wobei die Wetterschutzeinheit an dem zweiten Türelement unabhängig von der Rückhaltevorrichtung schwenkbar angelenkt ist, kann der Fahrer die Wetterschutzeinheit unabhängig von der Rückhaltevorrichtung handhaben, so dass hinsichtlich der Maßnahmen zum Schutz gegen Schlechtwettereinflüsse und Verletzungen bei Unfällen ein Maximum an Flexibilität geschaffen wird. Insbesondere kann der Fahrer bei heißer Witterung in der aufgeschwenkten Position der Wetterschutzeinheit arbeiten, ohne dass die Schutzwirkung der Rückhaltevorrichtung beeinträchtigt wird. Zum Schutz vor Schlechtwettereinflüssen kann der Fahrer bei geschlossener Wetterschutzeinheit und Rückhaltevorrichtung arbeiten und beide lediglich zum Ein- und Aussteigen öffnen.

Da die Wetterschutzeinheit selbst keine Schutzfunktion bei Unfällen wahrnehmen muß, kann sie in Leichtbauweise ausgeführt sein.

Infolge der Aufteilung der Schutztür in ein erstes und ein zweites Türelement können die Rückhaltevorrichtung sowie die Wetterschutzeinheit eine im Vergleich zur gesamten Türbreite reduzierte Breite aufweisen, wodurch sie leicht geöffnet bzw. geschlossen, insbesondere auch von nur einer Person ausgehangen werden können, so dass sich insgesamt eine bequeme Handhabung ergibt.

Gemäß einer bevorzugten Ausführungsform ist das zweite Türelement an einen hinteren Holm der Fahrerkabine schwenkbar anlenkbar. Hierdurch wird die Durchführung von Servicearbeiten in der Fahrerkabine erleichtert, da zusätzlich zu dem ersten Türelement auch das zweite Türelement vollständig geöffnet werden kann.

Vorzugsweise sind Mittel zum Fixieren der Wetterschutzeinheit in der Aufschwenkposition vorgesehen, so dass der Fahrer die Schutztür bei wechselhaftem Wetter schnell und unkompliziert umfunktionieren kann.

Gemäß einer weiteren bevorzugten Ausführungsform ist die Wetterschutzeinheit an dem zweiten Türelement über das zweite Scharnier so angelenkt, dass sie an diesem ein- bzw. ausgehängt werden kann. Hierdurch kann insbesondere möglichen Beschädigungen entgegengewirkt werden.

Die Wetterschutzeinheit weist bevorzugt ein Schiebefenster auf und ist vorzugsweise wenigstens teilweise aus Polycarbonat hergestellt, welches zum einen für optimale Sichtverhältnisse sorgt und zum anderen ein relativ geringes Gewicht aufweist, sowie kratzfest und UV-beständig ist.

Gemäß einer weiteren bevorzugten Ausführungsform weist die Rückhaltevorrichtung einen ellipsoiden Bügelrahmen aus einem oberen Ellipsenbügel und einem unteren Ellipsenbügel auf, wobei die miteinander an ihren Enden verbundenen Ellipsenbügel des ellipsoiden Bügelrahmens an dem zweiten Türelement oberhalb der Sitzlehne eines Fahrersitzes der Fahrerkabine mittels des ersten Scharniers schwenkbar angelenkt und an dem vorderen Holm in Höhe der Sitzfläche des Fahrersitzes mittels einer Verriegelungseinrichtung verriegelbar sind.

Hierdurch wird gewährleistet, dass Arm-, Körper- und Beinbereich des Fahrers unabhängig von der Körpergröße des Fahrers seitlich geschützt werden. Hüft-, Knie- und Schulterpunkte sind für alle Fahrergrößen durch die angepaßten Radien des ellipsoiden Bügelrahmens geschützt.

Zur Verringerung der Verletzungsgefahr ist der ellipsoide Bügelrahmen bevorzugt aus einem Rechteckprofil gefertigt.

Gemäß einer weiteren bevorzugten Ausführungsform ist zur Erhöhung der Steifigkeit und zum erhöhten Schutz des Fahrers ein Haltebügel vorgesehen, der etwa in der Mitte des unteren Bügels des ellipsoiden Bügelrahmens ansetzt und über ein weiteres Scharnier am Holm unterhalb des ersten Scharniers, etwa in Höhe des Übergangsbereiches zwischen Lehne und Schemel des Fahrzeugsitzes angelenkt ist. Bei dieser Ausführungsform wird die Steifigkeit des Systems noch weiter erhöht und zusätzlich der Beckenbereich des Fahrers durch den Haltebügel geschützt. Des weiteren ist bei dieser Ausführungsform die Bewegungsfreiheit des Fahrzeugführers nicht eingeschränkt, da zwischen dem Haltebügel und den beiden Ellipsenbügeln ausreichend Ellenbogenfreiheit gegeben ist.

Gemäß einer weiteren bevorzugten Ausführungsform ist der Haltebügel über den unteren Ellipsenbügel weiter verlängert, so dass er am oberen Ellipsenbügel festgelegt ist. Diese Ausführungsform ergibt eine erhöhte Verwindungssteifigkeit des ellipsoiden Bügels. Bei dieser Ausführungsform ist weiterhin von Vorteil, wenn zwischen dem unteren Ellipsenbügel und dem Haltebügel ein Hüftpolster vorgesehen ist. Das Hüftpolster kann vorzugsweise Mittel zur Erhöhung der Steifigkeit aufweisen und hierzu beispielsweise an einer mit einer Halterung versehenen dreieckigen Schutzplatte aus Blech angebracht sein.

Gemäß einer weiteren bevorzugten Ausführungsform ist am oberen Ellipsenbügel ein Betätigungselement für die Verriegelungseinrichtung, vorzugsweise im Übergangsbereich zwischen oberem Ellipsenbügel und Haltebügel, vorgesehen.

Die erfindungsgemäß verwendeten Scharniere und die Befestigungsvorrichtung werden vorzugsweise als Schraub- oder Klemmbefestigung ausgeführt, so dass sich die erfindungsgemäße Sicherungsvorrichtung leicht nachrüsten lässt.

Die Erfindung wird nachstehend anhand eines in den beigefügten Abbildungen dargestellten Ausführungsbeispiels näher erläutert.

Es zeigen:
Fig. 1 eine schematische Seitenansicht einer erfindungsgemäßen Schutztür für Fahrerkabinen; und
Fig. 2 a)-d) unterschiedliche Betriebs- bzw. Öffnungsvarianten der erfindungsgemäßen Schutztür aus Fig. 1.

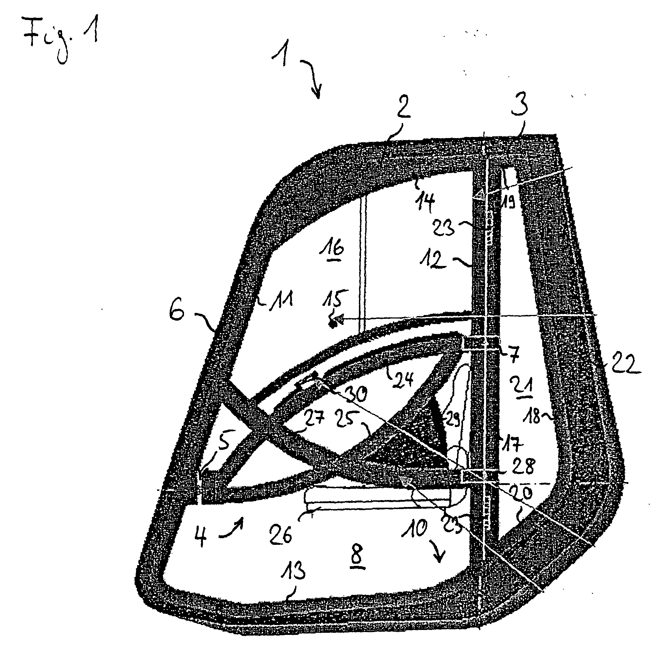

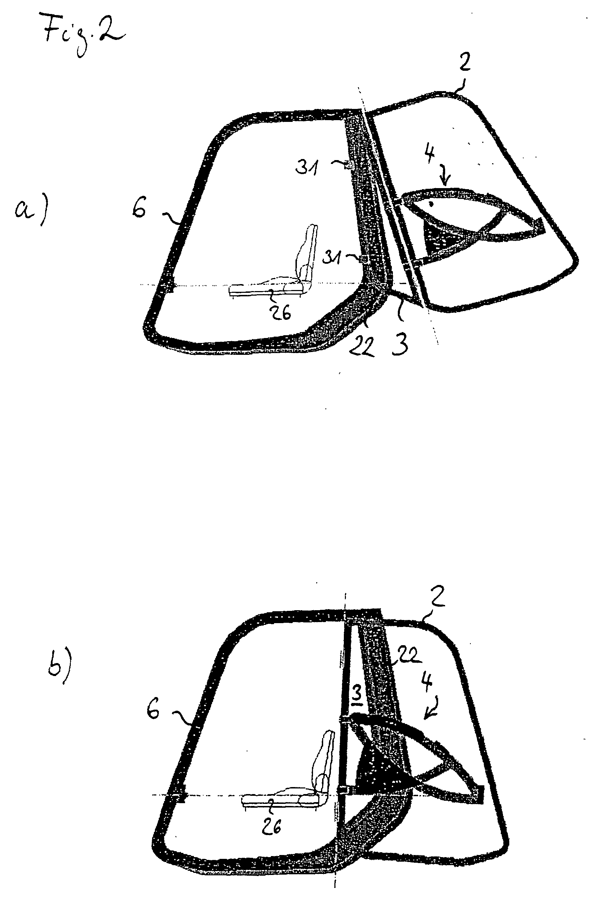

Gemäß Fig. 1 ist eine erfindungsgemäße Schutztür 1 schematisch in Seitenansicht dargestellt. Die Schutztür 1 ist insbesondere für Fahrerkabinen in allen Arten von Nutzfahrzeugen wie Gabelstaplern, Schleppern sowie Bau- und Landmaschinen geeignet und weist ein erstes Türelement 2 und ein zweites Türelement 3 auf.

Das erste Türelement 2 weist eine Rückhaltevorrichtung 4 auf, die über eine Verriegelungseinrichtung 5 an einem vorderen Holm 6 verriegelt ist. Die Verriegelungseinrichtung 5 kann vorzugsweise einen Schnappriegel, einen Drehverschluß oder dergleichen aufweisen. Der vordere Holm 6 kann beispielsweise die A-Säule der Fahrerkabine sein. Auf ihrer der Verriegelungseinrichtung 5 abgewandten Seite ist die Rückhaltevorrichtung 4 an dem zweiten Türelement 3 über ein erstes Scharnier 7 schwenkbar angelenkt.

Ferner weist das erste Türelement 2 eine Wetterschutzeinheit 8 auf, die in dem dargestellten Ausführungsbeispiel als eine Wetterschutzscheibe 9 aus Polycarbonat ausgebildet ist, die in einem Rahmen 10 aus Stahl mit seitlichen Streben 11, 12 und unteren bzw. oberen Streben 13, 14 eingefaßt ist. Die Wetterschutzscheibe 9 ist auf ihrer der oberen Strebe 14 zugewandten Seite zur Ausbildung eines mit einem Griff 15 versehenen Schiebefensters 16 unterteilt.

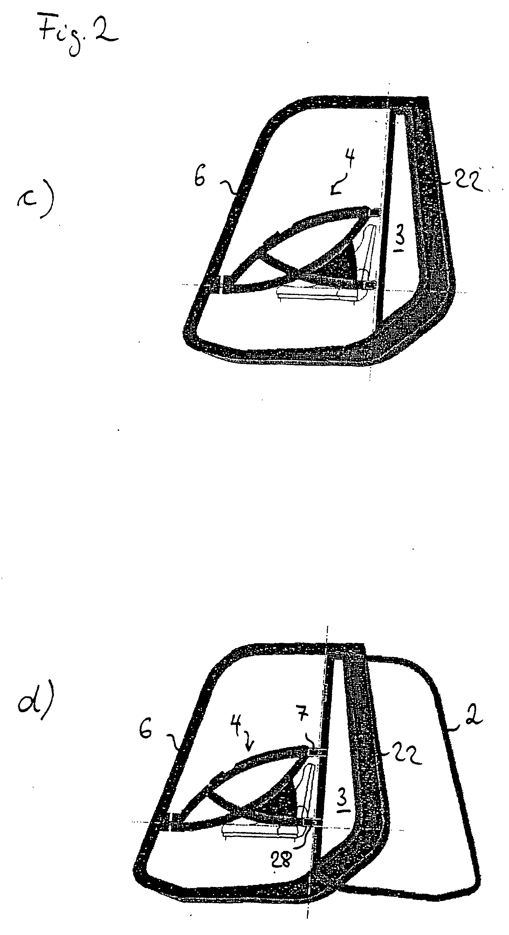

Der Rahmen 10 der Wetterschutzeinheit 8 ist an der hierzu benachbarten seitlichen Strebe 17 des zweiten Türelements 3 über ein zweites Scharnier 23 schwenkbar angelenkt. Das zweite Türelement 3 weist eine zwischen seitlichen Streben 17, 18 und oberen bzw. unteren Streben 19, 20 eingefaßte Scheibe 21, vorzugsweise ebenfalls aus Polycarbonat hergestellt, auf und ist an einem hinteren Holm 22, beispielweise der B-Säule der Fahrerkabine, über ein (aus Fig. 2a ersichtliches) drittes Scharnier 31 schwenkbar angelenkt.

Nachfolgend wird die bei dem dargestellten Ausführungsbeispiel vorgesehene bevorzugte Ausgestaltung der Rückhaltevorrichtung 4 detailliert beschrieben.

Gemäß Fig. 1 ist die Rückhaltevorrichtung 4 als ellipsoider Bügelrahmen mit einem oberen Ellipsenbügel 24 und einem unteren Ellipsenbügel 25 ausgebildet. Die miteinander an ihren Enden verbundenen Ellipsenbügel 24, 25 des ellipsoiden Bügelrahmens sind an dem zweiten Türelement 3 oberhalb der Sitzlehne eines Fahrersitzes 26 der Fahrerkabine mittels des Scharniers 7 schwenkbar angelenkt und an dem vorderen Holm 6 in Höhe der Sitzfläche des Fahrersitzes 26 über die Verriegelungseinrichtung 5 verriegelbar.

Ferner weist die Rückhaltevorrichtung 4 einen Haltebügel 27 auf, der etwa in der Mitte des unteren Ellipsenbügels 25 ansetzt und über ein viertes Scharnier 28 an der seitlichen Strebe 17 im zweiten Türelement 3 unterhalb des ersten Scharniers 7 angelenkt ist. Der Haltebügel 27 ist über den unteren Ellipsenbügel 25 zum oberen Ellipsenbügel 24 verlängert und am oberen Ellipsenbügel 24 festgelegt. Der Haltebügel 27, der untere Ellipsenbügel 25 und der obere Ellipsenbügel 24 weisen vorzugsweise einen rechteckigen Querschnitt auf.

Zwischen dem unteren Ellipsenbügel 25 und dem Haltebügel 27 ist bevorzugterweise ein Hüftpolster 29 vorgesehen, welches vorzugsweise an einer aus Blech hergestellten und mit einer Halterung für das Hüftpolster 29 versehenen Schutzplatte angebracht ist. Am oberen Ellipsenbügel 24, vorzugsweise im Übergangsbereich zwischen oberen Ellipsenbügel 24 und Haltebügel 27, ist außerdem ein Betätigungselement 30 für die Verriegelungsvorrichtung 5 vorgesehen.

Gemäß Fig. 2a-d lassen sich mittels der erfindungsgemäßen Schutztür 1 in einfacher Weise unterschiedliche Betriebsvarianten realisieren.

So können gemäß Fig. 2a das erste und zweite Türelement 2, 3 beispielsweise zur Durchführung von Servicearbeiten in der Fahrerkabine durch Lösen der Verriegelungseinrichtung 5 und Aufschwenken des zweiten Türelementes 3 bezüglich des hinteren Holms 22 gemeinsam aufgeklappt werden.

Gemäß Fig. 2b kann bei fixiertem zweiten Türelement 3 auch lediglich das erste Türelement 2 mitsamt der Rückhaltevorrichtung 4 zum Ein- oder Aussteigen in die Fahrerkabine mittels der Scharniere 7 und 28 aufgeschwenkt werden.

Gemäß Fig. 2d kann auch die Wetterschutzeinheit 8 unabhängig von der Rückhaltevorrichtung 4 bezüglich der Scharniere 7, 28 um etwa 180° aufgeschwenkt und in dieser Position, beispielsweise an einer am Fahrzeug vorgesehenen Verriegelungseinrichtung fixiert werden oder auch gemäß Fig. 2c als "Schönwetterlösung" komplett ausgehangen werden.

Die erfindungsgemäße Schutztür weist somit hinsichtlich der möglichen Betriebsvarianten ein Maximum an Flexibilität auf, da der Fahrer eine Wetterschutzeinheit unabhängig von einer zum Schutz vor Verletzungen dienenden Rückhaltevorrichtung handhaben kann. Hierbei ist durch die spezielle Ausgestaltung der Rückhaltevorrichtung mit einem ellipsoiden Bügelrahmen gewährleistet, daß diese den Fahrer unabhängig von seiner Körpergröße zuverlässig vor Verletzungen schützt.

## Patentansprüche

1. Schutztür für Fahrerkabinen, insbesondere von Nutzfahrzeugen, mit einem ersten Türelement (2), welches eine an einem vorderen Holm (6) einer Fahrerkabine verriegelbare Rückhaltevorrichtung (4) für den Fahrer zur Sicherung gegen seitliches Herausfallen aufweist, **dadurch gekennzeichnet, dass** das Türelement weiter eine Wetterschutzeinheit aufweist, und
ein zu dem ersten Türelement (2) benachbartes zweites Türelement (3), an welchem die Rückhaltevorrichtung (4) über ein erstes Scharnier (7) schwenkbar angelenkt ist und die an einem hinteren Holm (22) der Fahrerkabine befestigbar ist,
wobei die Wetterschutzeinheit (8) des ersten Türelementes (2) an dem zweiten Türelement (3) über ein zweites Scharnier (23) zwischen einer Schließposition und einer Aufschwenkposition unabhängig von der Rückhaltevorrichtung (4) um vorzugsweise 180° schwenkbar angelenkt ist.

2. Schutztür nach Anspruch 1, wobei das zweite Türelement (3) an dem hinteren Holm (22) der Fahrerkabine über ein drittes Scharnier (31) schwenkbar anlenkbar ist.

3. Schutztür nach Anspruch 1 oder 2, wobei Mittel zum Fixieren der Wetterschutzeinheit (8) in der Aufschwenkposition vorgesehen sind.

4. Schutztür nach einem der Ansprüche 1 bis 3, wobei die Wetterschutzeinheit (8) an dem zweiten Türelement (3) über das zweite Scharnier (23) so angelenkt ist, daß sie an diesem ein- bzw. ausgehängt werden kann.

5. Schutztür nach einem der Ansprüche 1 bis 4, wobei die Wetterschutzeinheit (8) ein Schiebefenster (16) aufweist.

6. Schutztür nach einem der Ansprüche 1 bis 5, wobei die Wetterschutzeinheit (8) wenigstens teilweise aus Polycarbonat hergestellt ist.

7. Schutztür nach einem der Ansprüche 1 bis 6, wobei die Rückhaltevorrichtung (4) einen ellipsoiden Bügelrahmen aus einem oberen Ellipsenbügel (24) und einem unteren Ellipsenbügel (25) aufweist, wobei die miteinander an ihren Enden verbundenen Ellipsenbügel (24,25) des ellipsoiden Bügelrahmens an dem zweiten Türelement (3) oberhalb der Sitzlehne eines Fahrersitzes (26) der Fahrerkabine mittels des ersten Scharniers (7) schwenkbar angelenkt und an dem vorderen Holm (6) in Höhe der Sitzfläche des Fahrersitzes (26) mittels einer Verriegelungseinrichtung (5) verriegelbar sind.

8. Schutztür nach Anspruch 7, wobei die Rückhaltevorrichtung (4) zusätzlich einen Haltebügel (27) aufweist, der etwa in der Mitte des unteren Ellipsenbügels (25) des ellipsoiden Bügelrahmens ansetzt und über ein viertes Scharnier (28) am zweiten Türelement (3) unterhalb des ersten Scharniers (7) angelenkt ist.

9. Schutztür nach Anspruch 8, wobei zusätzlich zwischen dem unteren Ellipsenbügel (25) und dem Haltebügel (27) ein Hüftpolster (29) vorgesehen ist, welches vorzugsweise mit Mitteln zur Erhöhung der Steifigkeit versehen ist.

10. Schutztür nach Anspruch 8 oder 9, wobei der Haltebügel (27) über den unteren Ellipsenbügel (25) zum oberen Ellipsenbügel (24) verlängert und am oberen Ellipsenbügel (24) festgelegt ist.

11. Schutztür nach einem der Ansprüche 8 bis 10, wobei am oberen Ellipsenbügel (24) ein Betätigungselement (30) für die Verriegelungseinrichtung (5), vorzugsweise im Übergangsbereich zwischen oberem Ellipsenbügel (24) und Haltebügel (27), vorgesehen ist.

12. Schutztür nach einem der Ansprüche 8 bis 11, wobei Haltebügel (27), unterer Ellipsenbügel (25) sowie oberer Ellipsenbügel (24) einen rechteckigen Querschnitt aufweisen.

13. Fahrerkabine mit einer Schutztür nach einem der Ansprüche 1 bis 12.

14. Fahrzeug mit einer Fahrerkabine nach Anspruch 13.

## Claims

1. Protective door for drivers' cabins, in particular for utility vehicles, having a first door element (2), which comprises a restraining device (4) for the driver, which can be locked on a front brace (6) of a driver's cabin to secure said driver against a lateral fall, **characterised in that** said first door element (2) further comprises a weatherproof unit (8); and a second door element (3), which is adjacent to the first door element (2), on which the restraining device (4) is hinged so that it can pivot by means of a first hinge (7), and which can be fastened on a rear brace (22) of the driver's cabin; wherein said weatherproof unit (8) of the first door element (2) is hinged onto the second door element (3) by means of a second hinge (23), in such a way that it can pivot preferably through 180° between a closed position and a swung-open position independently of the restraining device (4).

2. Protective door according to claim 1, wherein said second door element (3) is hinged so that it can be pivot by means of a third hinge (31) at said rear brace (22) of the driver's cabin.

3. Protective door according to claim 1 or 2, wherein means are provided for fixing the weatherproof unit (8) in the swung-open position.

4. Protective door according to any one of claims 1 to 3, wherein said weatherproof unit (8) is hinged so that it can pivot by means of said second hinge (23) at said second door element (3), such that it can be fitted thereon or removed therefrom.

5. Protective door according to any one of claims 1 to 4, wherein said weatherproof unit (8) has a sliding window (16).

6. Protective door according to any one of Claims 1 to 5, wherein said weatherproof unit (8) is produced, at least in part, from polycarbonate.

7. Protective door according to any one of claims 1 to 6, wherein said restraining device (4) has an ellipsoidal bracket frame comprising a top elliptical bracket (24) and a bottom elliptical bracket (25), the elliptical brackets (24, 25) of the ellipsoidal bracket frame, which are connected to one another at their ends, are hinged so that they can pivot by means of said first hinge (7) at the second door element (3) above the backrest of a driver's seat (26) of the driver's cabin, and they can be locked on the front brace (6), level with the height of the seat surface of the driver's seat (26), by means of a locking device (5).

8. Protective door according to claim 7, wherein said restraining device (4) additionally has a retaining bracket (27) which starts approximately in the centre of the bottom elliptical bracket (25) of the ellipsoidal bracket frame and is hinged so that it can pivot by means a of fourth hinge (28) on the second door element (3) beneath the first hinge (7).

9. Protective door according to claim 8, wherein a hip pad (29) preferably provided with means for increasing the stiffness is additionally provided between the bottom elliptical bracket (25) and the retaining bracket (27).

10. Protective door according to claim 8 or 9, wherein said retaining bracket (27) is extended beyond the bottom elliptical bracket (25) to the top elliptical bracket (24) and secured on the top elliptical bracket (24).

11. Protective door according to one of claims 8 to 10, wherein an actuating element (30) for the locking device (5) is provided on the top elliptical bracket (24), preferably in the region of transition between the top elliptical bracket (24) and retaining bracket (27).

12. Protective door according to one of claims 8 to 11, wherein said retaining bracket (27), bottom elliptical bracket (25) and top elliptical bracket (24) have a rectangular cross section.

13. Driver's cabin with a protective door according to any one of claims 1 to 12.

14. Vehicle with a driver's cabin according to claim 13.

## Revendications

1. Porte de protection pour cabines de conducteurs, notamment de véhicules utilitaires, comportant un premier élément de porte (2), qui comporte un dispositif de retenue (4), qui peut être verrouillé sur un montant avant (6) d'une cabine de conducteur, pour le conducteur de manière à fournir une protection vis-à-vis d'une chute latérale, **caractérisée en ce que** l'élément de porte comporte en outre une unité de protection contre les intempéries, et il est prévu un second élément de porte (3), qui est voisin du premier élément de porte (2) et sur lequel le dispositif de retenue (4) est articulé de manière à pouvoir pivoter par l'intermédiaire d'une première charnière (7) et peut être fixé à un montant arrière (22) de la cabine de conducteur, dans laquelle l'unité (8) de protection contre les intempéries du premier élément de porte (2) est articulée sur le second élément de porte (3) par l'intermédiaire d'une seconde charnière (23) de manière à pouvoir pivoter de préférence sur 180° entre une position fermée et une position ouverte par pivotement, indépendamment du dispositif de retenue (4).

2. Porte de protection selon la revendication 1, dans laquelle le second élément de porte (3) est articulé de manière à pouvoir pivoter par l'intermédiaire d'une troisième charnière (31) sur le montant arrière (22) de la cabine de conducteur.

3. Porte de protection selon la revendication 1 ou 2, dans laquelle des moyens pour fixer l'unité (8) de protection contre les intempéries sont prévus dans une position ouverte par pivotement.

4. Porte de protection selon l'une des revendications 1 à 3, dans laquelle l'unité (8) de protection contre les intempéries est articulée sur le second élément de porte (3) par l'intermédiaire de la seconde charnière (23) de telle sorte qu'elle peut être accrochée à cet élément de porte ou en être décrochée.

5. Porte de protection selon l'une des revendications 1 à 4, dans laquelle l'unité (8) de protection contre les intempéries comporte une fenêtre coulissante (16).

6. Porte de protection selon l'une des revendications 1 à 5, dans laquelle l'unité (8) de protection contre les intempéries est réalisée au moins en partie en polycarbonate.

7. Porte de protection selon l'une des revendications 1 à 6, dans laquelle le dispositif de retenue (4) comporte un cadre à anses elliptiques constituée par une anse elliptique supérieure (24) et une anse elliptique inférieure (25), les anses elliptiques (24,25) du cadre elliptique à anses, reliées entre elles au niveau de leurs extrémités, sont articulées de manière à pouvoir pivoter à l'aide de la première charnière (7) sur le second élément de porte (3) au-dessus du dossier d'un siège de conducteur (26) de la cabine de conducteur et peuvent être verrouillées sur le montant avant (6) à hauteur de la surface du siège de conducteur (26), au moyen d'un dispositif de verrouillage (5).

8. Porte de protection selon la revendication 7, dans laquelle le dispositif de retenue (4) porte en supplément un étrier de retenue (27), qui est montée approximativement au centre de l'anse elliptique inférieure (25) du cadre elliptique à anses et est articulée, par l'intermédiaire d'une quatrième charnière (28) sur le second élément de porte (3) au-dessous de la première charnière (7).

9. Porte de protection selon la revendication 8, dans laquelle entre l'anse elliptique inférieure (25) et l'étrier de retenue (27) est prévu en supplément un rembourrage (29) au niveau de la hanche, qui est équipé de préférence de moyens pour accroître la rigidité.

10. Porte de protection selon la revendication 8 ou 9, dans laquelle l'étrier de retenue (27) se prolonge au-dessus de l'anse elliptique inférieure (25) jusqu'à l'anse elliptique supérieure (24) et est fixée sur l'anse elliptique supérieure (24).

11. Porte de protection selon l'une des revendications 8 à 10, dans laquelle sur l'anse elliptique supérieure (24) est prévu un élément d'actionnement (30) pour le dispositif de verrouillage (5), de préférence dans la zone de jonction entre l'anse elliptique supérieure (24) et l'étrier de retenue (27).

12. Porte de protection selon l'une des revendications 8 à 11, dans laquelle l'étrier de retenue (27), l'anse elliptique inférieure (25) ainsi que l'anse elliptique supérieure (24) possèdent une section transversale rectangulaire.

13. Cabine de conducteur comportant une porte de protection selon l'une des revendications 1 à 12.

14. Véhicule équipé d'une cabine de conducteur selon la revendication 13.
